# EUROPEAN PATENT SPECIFICATION

(11) **EP 3 914 770 B1**
(45) Date of publication and mention of the grant of the patent: **12.03.2025**
(21) Application number: 20703290.5
(22) Date of filing: 24.01.2020
(51) Int. Cl.: D21H 19/82, D21H 21/16, D21H 19/22, D21H 19/48, D21H 19/58, D21H 19/84, D21H 27/10

(54) **HEAT-SEALABLE PAPERBOARD**
HEISSSIEGELBARE PAPPE
CARTON THERMOSCELLABLE

(30) Priority: 25.01.2019 SE 1950089
(43) Date of publication of application: 01.12.2021
(73) Proprietor: Stora Enso Oyj, 00101 Helsinki (FI)
(72) Inventor: NYFLÖTT, Åsa, 65636 Karlstad (SE); BONNERUP, Chris, 44834 Floda (SE); EKBERG, Magnus, 77497 Fors (SE)
(74) Representative: Steinrud, Henrik
(86) International application number: PCT/IB2020/050553
(87) International publication number: WO 2020/152635

(56) References cited:
- EP-A1- 0 543 793
- WO-A1-02/053838
- WO-A1-2013/098026
- WO-A1-2018/116118
- WO-A1-98/54410
- WO-A2-2006/007239
- JP-A- 2008 087 784
- US-A- 5 635 279
- US-A1- 2016 348 318
- US-A1- 2018 058 010

## Description

The present invention relates to packaging comprising or being made from a heat-sealable paperboard. The packaging is usable for packaging of liquids or frozen food.

Fiber based material used in packages or cups for liquids or frozen food is usually provided with barrier coatings both on the inside, which faces the packed item, and on the outside which provides the print-side of the package. The barrier coating applied on the inside makes the material resistant against e.g. liquids, grease, oxygen and/or aroma and enables it to withstand the influence of the packed item on the packing material. The barrier coating should also be heat-sealable. Barrier coating of paperboard has long been dominated by lamination with low-cost, readily available polyolefins, such as polyethylene (PE) or polypropylene (PP). Today, also bio-based versions thereof are used including other bio-based polymers such as polylactic acid (PLA). Liquid packaging board is usually provided with a laminated polymer coating on both sides and oftentimes with an additional aluminum coating layer on the inside.

Extrusion coated packaging materials including several layers of polyolefins and aluminum foil are hard to re-pulp due to problems in separating the plastic coating from the paperboard. This has increased the interest for dispersion barrier coated paperboard, wherein an aqueous dispersion of fine polymer particles is applied on the paperboard surface. The coatings can be based on e.g. styrene-acrylate (SA) or styrene-butadiene (SB) latex or polyolefin dispersions. Various dispersion coated paperboard materials have been disclosed in regards of repulpable materials providing barrier properties. WO 2015/155413 A1, for example, discloses a coated food cardboard which comprises a cardboard layer and a coating layer on at least one side, wherein a barrier layer is arranged between the coating layer and the cardboard containing binder and slate-like mineral pigment. The coating layer comprises light-refracting pigment or mixture of pigments and a binder, which may be a synthetic latex of polymers of e.g. butadiene-styrene type copolymers. US 9771688 discloses a coated paperboard comprising a base coat and a top coat, each comprising binder and pigment. The teaching refers to styrene-acrylate copolymer or styrene-butadiene copolymer as binders. EP 2358942 discloses a recyclable coated paperboard coated with a first and second coating layer formed from an aqueous polymer dispersion, where each layer consists of from about 70 to about 90 wt% of polymer emulsion and 10 to about 30 wt% pigments. The teaching only refers to coatings of acrylic polymers and copolymers, copolymers of styrene and butadiene, vinyl acetate polymers, polyvinyl alcohol, or polyethylene vinyl acetate containing pigments. WO 2018/116118 A1 discloses a heat-sealable packaging material comprising a first and a second dispersion barrier layer on the print side, wherein both dispersion barrier layer comprise a latex, preferably a styrene-butadiene or a styrene-acrylate latex.

The patent documents WO 98/54410 A1, EP 0 543 793 A1, WO 02/053838 A1, US 2018/058010 A1, JP 2008 087784 A, and WO 2013/098026 A1 describe paper or paperboard based substrates coated with various combinations of coating layers.

One problem related to dispersion barrier coated paperboard is that the coating may crack during conversion to packaging, whereby the barrier at the folding lines may deteriorate. Thus, there remains a need for a coated paperboard that is suitable for the manufacturing of packaging or cups for liquids or food, which is repulpable, provides the required barrier against moisture and liquid, and has good mechanical properties.

This object is met with the packaging comprising or being made from a heat-sealable paperboard and a method of manufacturing a packaging according to the independent claims of the present invention. The dependent claims are related to preferred embodiments. They may be combined freely unless the context clearly indicates otherwise.

The invention provides a packaging comprising or being made from a heat-sealable paperboard, the heat-sealable paperboard comprising:
- a paperboard substrate comprising a first side and a second side,
- a first dispersion coating layer on the first side of the paperboard substrate, wherein the first dispersion coating layer has a grammage in a range of from ≥ 5 g/m² to ≤ 10 g/m²,
- a second dispersion coating layer on the first dispersion coating layer, wherein the second dispersion coating layer has a grammage in a range from ≥ 5 g/m² to ≤ 10 g/m², and
- a third dispersion coating layer (4) on the second side of the paperboard substrate (1), wherein the first dispersion coating layer comprises a latex and pigments and the second dispersion coating layer comprises a polyolefin in an amount in a range from ≥ 90 wt% to ≤ 100 wt%, based on the dry solid content of the layer, and the third dispersion coating layer (4) comprises polyolefin in an amount in a range from ≥ 90 wt% to ≤ 100 wt%, based on the dry solid content of the layer,
wherein the coated first side of the paperboard substrate forms an inside of the packaging and the coated second side of the paperboard substrate forms a print side of the packaging, and wherein the reject level determined according to PTS test method RH021/97 received from the repulping of the paperboard is less than 12 wt%, based on a dry weight of the paperboard of 100 wt%.

The heat-sealable paperboard comprises a double coating including a first coating comprising latex and pigment in contact with the baseboard and a second coating comprising dispersion coated polyolefin on the side that will form the inside of a thereof formed package. This combination of first and second dispersion coating layers achieves several advantages. The paperboard provides good heat-sealability, good barrier properties and excellent mechanical properties. It has surprisingly been found that the paperboard can be converted to a packaging reducing or even without problems with cracks formed in the coating. It is assumed that this is enabled by the advantageous mechanical properties, including a high stretch at break. Without being bound to a specific theory, it is assumed that the pre-coating of a first dispersion coating layer of latex and pigments hinders the second layer of polyolefin dispersion to penetrate into the paperboard substrate whereby a smooth coating of uniform thicknesno s is accomplished, which is believed to contribute to the high mechanical properties.

It is a further important advantage that the surfaces of the heat-sealable paperboard exhibits a low friction, which facilitates converting and handling of the thereof formed packaging or cups. This is especially advantageous at the piling of packages or cups. The paperboard in addition is repulpable, and the reject level in the repulping of the paperboard or a packaging made thereof may be less than 10 wt%, based on the dry weight. The paperboard further fulfills the food safety legislations.

As used herein, "paperboard substrate" or "baseboard" refers to a paper based substrate of an amalgamation of fibers that can include, at least in part, vegetable, wood, and/or synthetic fibers. The paperboard substrate preferably comprises cellulosic fibers. A typical paperboard substrate used for packaging material comprises at least one ply, preferably several plies. The paperboard substrate is preferably a multilayer paperboard, comprising at least two layers of a back ply and a top ply. The paperboard substrate may further comprise one or several middle plies. The paperboard substrate for example may comprise a top ply and a back ply and a middle ply.

The grammage of a paper layer or coating layer refers to the weight expressed as grams per square meter, gsm or g/m². As used herein, gsm and g/m² may be used interchangeable.

As used herein, "dispersion coating layer" refers to a layer that has been applied by dispersion coating onto the paperboard substrate. As used herein, "dispersion coating" refers to a coating technique where an aqueous dispersion of fine polymer particles is applied to the surface of a paper or paperboard to form a solid, substantially non-porous film after drying. The dispersion coating layers may be applied by the use of roller coating, spray coating, curtain, blade coating, slot coating, immersion coating, gravure roll coating, reverse direct gravure coating, rod coating, soft-tip blade coating and/or combinations thereof. Preferred coating methods are blade coating and rod coating. Dispersion coatings can be recycled. As used herein, "dispersion coated polyolefin" refers to polyolefin applied by dispersion coating.

Dispersion coating may be used to apply a layer providing barrier properties to the paperboard substrate. As used herein, a "barrier coating layer" or "barrier layer" refers to a coating layer providing barrier properties to the paperboard substrate by reducing or eliminating permeability, for example of gases such as oxygen through the material and/or the absorption of liquids in the fiber structure. Barrier coatings are required to prevent the egress of packaged products such as liquids, and to prevent the ingress into the package of oxygen, moisture, grease, oil or other contaminants that might deteriorate the quality of the packaged product.

A "printing surface" is meant to define a surface adapted to be printed. The "print side" of a paperboard thus refers to the outward side of a package formed from the paperboard. An "inside" layer of a paperboard refers to the side intended to come into contact with a content in a package formed from the paperboard. Referring to the paperboard substrate comprising a first side and a second side, the first side refers to the "inside" or "reverse side" of a thereof formed package, while the second side refers to the "print side".

As used herein, "pigment" refers to extenders, fillers and coatings such as clay, chalk or kaolin used for papermaking as usually referred to in the paper industry.

If not specifically denoted otherwise, given % are weight%, and are calculated on the basis of a dry weight of 100 weight% of the respective object, such as a layer, ply or packaging. The total amount of all components of a layer, ply or packaging does not exceed 100 wt%.

The stretch at break (CD), providing a measure of the mechanical properties, of the paperboard as expressed herein is determined by tensile strength according to ISO 1924-2.

The water absorption rate (COBB 600) is determined according to SCAN-test P 12:64 (1964)).

The reject received from the repulping of the packaging material is determined according to PTS test method RH021/97.

The present invention will be further described in connection with various embodiments and other aspects. They may be combined freely unless the context clearly indicates otherwise.

As used herein, "latex" refers to a polymer applied or coated from an aqueous suspension of polymer particles selected from the group comprising styrene-butadiene latex, styrene-acrylate latex, acrylate latex, vinyl acetate latex, vinyl acetate-acrylate latex, styrene-butadiene-acrylonitrile latex, styrene-acrylate-acrylonitrile latex, styrene-butadiene-acrylate-acrylonitrile latex, styrene-maleic anhydride latex, styrene-acrylate-maleic anhydride latex, or mixture of these latexes. The latex can be natural polymers, synthetic polymers, synthetic polymers derived from biomass, or combinations thereof. The latex can be biobased, i.e. derived from biomass, such as biobased styrene-acrylate or styrene-butadiene latex. Biobased latex can provide similar performance, and provides improved carbon footprint.

In embodiments, the latex in the first dispersion coating layer is selected from styrene-acrylate (SA) latex, styrene-butadiene (SB) latex, or a mixture thereof. Preferably, the first dispersion coating layer may comprise latex as the only binder. In embodiments of the heat-sealable paperboard, the first dispersion coating layer comprises the latex in an amount in a range from ≥ 30 wt% to ≤ 70 wt%, based on the dry solid content of the layer. The first dispersion coating layer may comprise latex in an amount around 40 wt%, based on the dry solid content of the layer.

In embodiments, the first dispersion coating layer comprises pigment in an amount in a range from ≥ 30 wt% to ≤ 70 wt%, based on the dry solid content of the layer. The first dispersion coating layer may comprise pigments in an amount in a range from ≥ 55 wt% to ≤ 70 wt% or in an amount of or around 60 wt%, based on the dry solid content of the layer. Pigments may improve the barrier properties of the dispersion coating layer. A high amount of pigment enables an efficient barrier at a low coat weight. In embodiments, the pigment is selected from clay and/or talc. These pigments are preferred for food safety reasons. The clay may be kaolin clay.

The first dispersion coating layer has a grammage in a range from from ≥ 5 g/m² to ≤ 10 g/m². A layer comprising latex and a high amount of pigments contacting the baseboard can provide suitable barrier properties at a low coat weight.

The first dispersion coating layer may comprise latex in an amount of 30 - 70 wt% and pigments in an amount of 70 - 30 wt%, preferably around 60 wt%, based on a dry solid content of the layer of 100 wt%. The first dispersion coating layer provides an inner barrier layer comprising latex and pigments, contacting the paperboard on one side and the second dispersion coating layer on its other side. The pre-coating of latex and pigments advantageously can hinder the additional layer of polyolefin dispersion to penetrate into the paperboard substrate. Thereby, a smooth coating of uniform thickness of the second inside layer may be accomplished, which is believed to contribute to the high mechanical properties of the coated paperboard.

The second dispersion coating layer comprises dispersion coated polyolefin. In embodiments, the polyolefin is selected from the group of polyethylene (PE), polypropylene (PP) and/or copolymers of polyethylene and polypropylene. These polymers provide desirable properties such as high moisture resistance and low heat-seal temperature. In a preferred embodiment, the second dispersion coating layer comprises a co-polymer of polyethylene and polypropylene. Particularly co-polymers of polyethylene and polypropylene provide advantageous heat-sealability for food packaging.

In embodiments, the second dispersion coating layer comprises the polyolefin in an amount in a range from ≥ 90 wt% to ≤ 98 wt%, based on the dry solid content of the layer. The second dispersion coating layer may comprise the polyolefin in an amount in a range from ≥ 95 wt% to ≤ 100 wt%, based on the dry solid content of the layer. A high amount of polyolefin further contributes to the heat-sealability properties.

The second dispersion coating layer preferably is free of pigments. The second dispersion coating layer may comprise a co-binder, preferably in small amounts. Co-binders may be selected from starch, carboxymethyl cellulose (CMC) and latex. Preferably, the co-binder is a latex. Preferably, the latex is selected from styrene-butadiene latex, styrene-acrylate latex, or a mixture thereof. In embodiments, the second dispersion coating layer comprises a co-binder in a range from ≥ 0 wt% to ≤ 5 wt%, preferably in a range from ≥ 1 wt% to ≤ 5 wt%, based on the dry solid content of the layer.

The second dispersion coating layer may comprise additives. Additives may be selected from the group of water retention agents, rheology modifiers, defoamers, antifoaming agents, pH adjustment additives, cross linkers, thickening agents, dispersing aids, slip additives, fillers, release agents, preservatives and antiblocking agents. Preferably, additives are selected from water retention agents, rheology modifiers, defoamers, cross-linkers, pH adjustment additives or thickeners. The second dispersion coating layer may comprise additives in a range from ≥ 0 wt% to ≤ 5 wt%, preferably in a range from ≥ 1 wt% to ≤ 5 wt%, based on the dry solid content of the layer.

The second dispersion coating layer has a grammage in a range from ≥ 5 g/m² to ≤ 10 g/m². Advantageously, the inside polyolefin layer can be applied at a low coat weight.

The paperboard substrate comprises a second side. In a package formed from the coated paperboard, this second side will face the outside and provide the print-side of the package.

The paperboard substrate comprises on the second side a third dispersion coating layer, wherein the third dispersion coating layer comprises polyolefin in an amount in a range from ≥ 90 wt% to ≤ 100 wt%, preferably in a range from ≥ 95 wt% to ≤ 100 wt%, based on the dry solid content of the layer. In this embodiment, the third dispersion coating layer on the print side preferably is designed similar or corresponds to the second dispersion coating layer on the first side. For the description of the third dispersion coating layer of this embodiment reference is made to the description of the second dispersion coating layer as described above. The polyolefin may be the same or different from the polyolefin of the second dispersion coating layer and may be selected from polyethylene (PE), polypropylene (PP) and/or copolymers of polyethylene and polypropylene. The polyolefin preferably is a co-polymer of polyethylene and polypropylene and the layer preferably is free of pigments.

In this embodiment, the heat-sealable paperboard may comprise a paperboard substrate, wherein the first side of the paperboard substrate is coated with a first dispersion coating layer comprising 40 wt% of latex and 60 wt% of pigment and a second dispersion coating layer on the first dispersion coating layer, the second dispersion coating layer comprising from ≥ 95 wt% to ≤ 100 wt% of polyolefin and preferably being free of pigment, and wherein the second or print side of the paperboard substrate is coated with a third dispersion coating layer comprising from ≥ 95 wt% to ≤ 100 wt% of polyolefin and preferably being free of pigment, all wt% based on the dry solid content of the respective layer. Such an embodiment is particularly useful as a side material for a packaging such as a cup formed form the heat-sealable paperboard.

The paperboard substrate is preferably a multi-layer paperboard, comprising a top ply and a back ply and one or several middle plies. The middle ply may provide bulk. Preferably, the paperboard substrate, also denoted baseboard, is a three-ply paperboard comprising a top ply, a middle ply and a back ply. The paperboard substrate may have a basis weight of about 150 gsm, preferably of about 200 gsm, or of about 300 gsm. A multilayer paperboard is particularly suitable for liquid and/or food packaging. The one or more middle plies can contain sulphate/kraft pulp and CTMP, which advantageously provide bulk. The pulp can be unbleached or bleached. The middle ply may comprise fibres originating from chemithermomechanical pulp (CTMP) or thermomechanical pulp (TMP). Preferably, the middle ply comprises sulphate pulp and CTMP. The top and back ply preferably comprise sulphate pulp. Top and back ply preferably will not comprise CTMP fibres. The first side of the paperboard substrate may become the inside side/reverse side, while the second side may become the print side of a thereof formed packaging.

The baseboard may be surface sized. Particularly, the top ply and/or the back ply of the paperboard substrate may be untreated or surface sized, for example with a thin layer of starch, on one or both sides. Surface sizing is applied prior to the application of the coating layers. The surface sizing may comprise or consist of modified starches or comprise surface sizing agents such as acrylic co-polymers. Surface sizing further enhances the barrier properties of the dispersion coating.

The heat-sealable paperboard advantageously provides excellent mechanical properties. In embodiments, the paperboard has
- a stretch at break (CD), determined by tensile strength according to ISO 1924-2, of ≥ 5 %, preferably ≥ 6 % or ≥ 7 % and/or
- a water absorption rate, COBB 600, determined according to SCAN-test P 12:64, of ≤ 10 g/m², preferably ≤ 5 g/m².

The water absorption rate is measured on the coated first side of the paperboard, i.e. on the side to form the reverse side/inside of the thereof formed package.

These mechanical properties, including a high stretch at break, enable the paperboard to be converted to a packaging without problems of cracks forming in the coating.

Further, the surfaces of the structure advantageously exhibits a low friction. In embodiments, the paperboard provides a static coefficient of friction (mean) of below 5, as measured on the inside side versus print side. The static coefficient of friction refers to the measurement of the angle of slide using an inclined plane, and for coated paperboards may be determined according to ISO 15359:1999. A low static coefficient of friction facilitates the handling of the thereof formed packaging or cups, for example for piling of the packages or cups.

The paperboard or a packaging made from the paperboard may be recycled into other paper products using common repulping technology. In the repulping the cellulose fibers are separated, and after cleaning are recyclable. The unrepulped fraction is referred to as rejects. Rejects have to be removed for disposal or burning. The reject level determined according to PTS test method RH021/97 received from the repulping of the paperboard may be less than 12 wt%, preferably less than 10 wt%, preferably less than 7 wt% or less than 5 wt%, based on a dry weight of the paperboard of 100 weight%. The paperboard shows very good repulpability. The paperboard thus provides a repulpable paperboard.

The paperboard advantageously provides barrier properties, is heat-sealable, repulpable, and provides good mechanical properties for converting. The paperboard thus is suitable to be used in packages for both cold and hot liquids or food as well as frozen food. The paperboard further enables easy handling of thereof formed packages when piled, and fulfills food safety requirements.

The invention further relates to a method of manufacturing a packaging, the method comprising the steps of:
- providing a paperboard substrate comprising a first side and a second side,
- applying a first dispersion coating layer on the first side of the paperboard substrate, wherein the first dispersion coating layer has a grammage in a range from ≥ 5 g/m² to ≤ 10 g/m²,
- applying a second dispersion coating layer on the first dispersion coating layer, wherein the second dispersion coating layer has a grammage in a range from ≥ 5 g/m² to ≤ 10 g/m², and
- applying a third dispersion coating layer on the second side of the paperboard substrate,
   to obtain a heast-sealable paperboard,
   wherein the first dispersion coating layer comprises a latex and pigment and the second dispersion coating layer comprises a polyolefin in an amount in a range from ≥ 90 wt% to ≤ 100 wt%, based on the dry solid content of the layer, and the third dispersion coating layer (4) comprises polyolefin in an amount in a range from ≥ 90 wt% to ≤ 100 wt%, based on the dry solid content of the layer,
- converting the heat-sealable paperboard to a packaging, wherein the coated first side of the paperboard substrate forms an inside of the packaging and the coated second side of the paperboard substrate forms a print side of the packaging, and wherein the reject level determined according to PTS test method RH021/97 received from the repulping of the paperboard is less than 12 wt%, based on a dry weight of the paperboard of 100 wt%.

The method further may comprise applying a fourth dispersion coating layer on the third dispersion coating layer. For the description of the dispersion coating layers reference is made to the description above. The dispersion coating layers are formed by dispersion coating. The dispersion layers may be applied by customary methods such as the use of roller coating, spray coating, curtain, blade coating, slot coating, immersion coating, gravure roll coating, reverse direct gravure coating, rod coating, soft-tip blade coating and/or combinations thereof. Preferably, the coating method is blade coating or rod coating.

The packaging is preferably made by use of heat-sealing of the paperboard as described above. The heat-sealable paperboard may be sealed by other methods than heat-sealing, but heat-sealing is widely used in the food packaging field. The packaging is particularly usable as container for both, cold and hot liquids or food, as well as for frozen food. The packaging may be used as a beverage container, such as a cup.

**In** embodiments, the packaging may be manufactured from two different embodiments of the heat-sealable paperboard as described above. The bottom of the packaging such as a cup may be manufactured from a heat-sealable paperboard comprising first, second, third and fourth dispersion coating layers as described above, while the side material may be manufactured from a heat-sealable paperboard comprising first, second and third dispersion coating layers, wherein the third dispersion coating layer comprises from ≥ 95 wt% to ≤ 100 wt% of polyolefin and is free of pigment.

Further features of the present invention will become apparent from the example and figure, wherein:
- Fig. 1: is a schematic drawing of a heat-sealable paperboard according to an embodiment of the invention.
- Fig. 2: is a schematic drawing of a heat-sealable paperboard according to another embodiment of the invention.

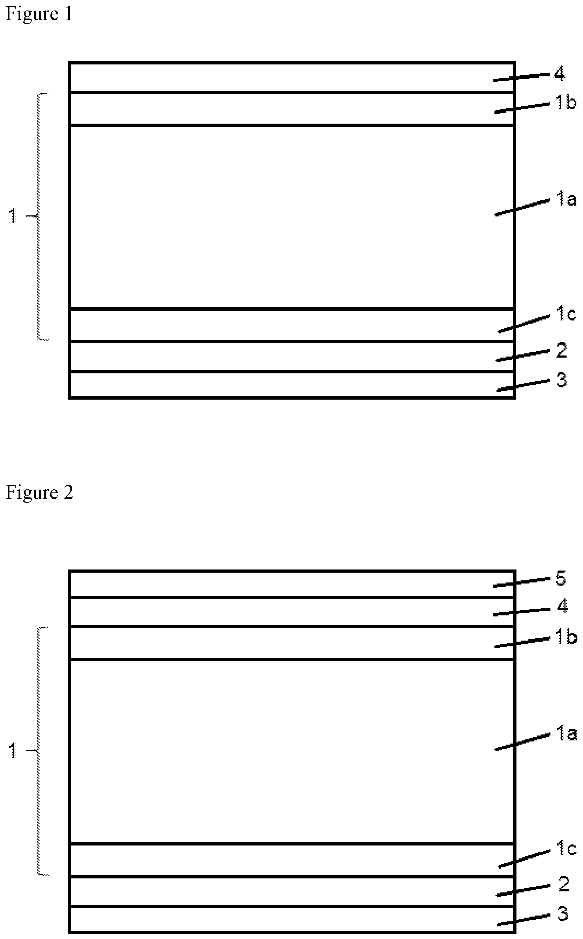

The heat-sealable paperboard as shown in Figure 1 comprises a paperboard substrate 1, comprising three plies, a middle ply 1a, a top ply 1b, and a back ply 1c. The middle layer 1a contains CTMP and sulphate pulp. The top ply 1b and the back ply 1c comprise sulphate pulp. The paperboard substrate comprises a first side and a second side, wherein the top ply 1b is arranged on the second side and the back ply 1c on the first side. The first side refers to the inside of a packaging such as a container made from the heat-sealable paperboard, while the second side refers to the print side of such a packaging.

On the first side of the heat-sealable paperboard, on the back ply 1c, the paperboard substrate 1 comprises a first dispersion coating layer 2, forming a first inside layer. The first dispersion coating layer 2 comprises a latex and pigment. The latex preferably is selected from styrene-butadiene latex, styrene-acrylate latex, or a mixture thereof. The pigment preferably is selected from clay or talc. A second dispersion coating layer 3 comprising a polyolefin is coated on the first dispersion coating layer 2. The second dispersion coating layer 3 forms a second inside layer. The polymer preferably is a copolymer of polyethylene and polypropylene. The polyolefin may be present in an amount in a range from ≥ 90 wt% to ≤ 100 wt%, based on the dry solid content of the layer. The second dispersion coating layer 3 may be free of pigments. The second dispersion coating layer 3 will be in contact with the content of a container produced from the paperboard.

On the second side of the paperboard, the top ply 1b is coated with a third dispersion coating layer 4. The dispersion coating layer 4 forms the printing surface of the heat-sealable paperboard. The paperboard may be printed directly on the dispersion coating layer 4. The third dispersion coating layer 4 comprises a polyolefin in an amount in a range from ≥ 50 wt% to ≤ 100 wt%, based on the dry solid content of the layer. The third dispersion coating layer 4 further may comprise a latex and pigment, together being present in an amount in a range from ≥ 0 wt% to ≤ 50 wt%, based on the dry solid content of the layer.

In an altemative embodiment, the third dispersion coating layer 4 comprises a polyolefin in an amount in a range from ≥ 95 wt% to ≤ 100 wt%, based on the dry solid content of the layer, and is preferably free of pigment. The paperboard may be printed directly on such a dispersion coating layer 4. The material of such embodiment is particularly suitable for the manufacture of the sides of heat-sealed product packages for cold and hot liquids or food, and frozen food.

The heat-sealable paperboard as shown in Figure 2 comprises a paperboard substrate 1, a first dispersion coating layer 2, forming a first inside layer and second dispersion coating layer 3 will be in contact with the content of a container produced from the paperboard as described for figure 1. On the second side of the paperboard, the top ply 1b is coated with a third dispersion coating layer 4. The third dispersion coating layer 4 comprises a latex and pigment. The latex preferably is selected from styrene-butadiene latex, styrene-acrylate latex, or a mixture thereof. The pigment preferably is selected from clay or talc. A fourth dispersion coating layer 5 comprising a polyolefin is coated on the third dispersion coating layer 4. The fourth dispersion coating layer 5 forms the outer surface of the heat-sealable paperboard. The polymer preferably is a copolymer of polyethylene and polypropylene. The polyolefin may be present in an amount in a range from ≥ 90 wt% to ≤ 100 wt%, based on the dry solid content of the layer. The fourth dispersion coating layer 5 may be free of pigments. The second dispersion coating layer 3 will be in contact with the content of a container produced from the paperboard. The material as shown in figure 2 is particularly suitable for the manufacture of the bottom of a heat-sealed product package for cold and hot liquids or food, and frozen food.

The material as shown in figure 1 and figure 2 is particularly suitable for the manufacture of heat-sealed product packages for cold and hot liquids or food, and frozen food.

### Example 1

In order to evaluate the packaging material of the invention, a test series was performed in which the barrier properties, the stretch at break and the static coefficient of friction of packaging material manufactured in accordance with the invention was evaluated in a laboratory trial using a rod coater.

A first dispersion coating composition (Dispersion 1) was prepared according to the table 1. All percentages calculated as dry solid content (wt%). A second dispersion coating (Dispersion 2) was prepared comprising 100 wt% co-polymer of polyethylene and polypropylene, as calculated on the dry solid content.

The coating compositions were coated by use of a rod coater on a paperboard Cupforma Natura (baseboard) of different grammages from 195 to 295 gsm, which is a three-layer paperboard with two outer layers made of bleached kraft pulps and a middle layer comprising bleached kraft pulp and CTMP. In all the samples 1 - 4, the dispersion 1 were coated on a first side (reverse side) of the paperboard to form first, innermost coating layer with a grammage of 7 gsm, whereupon the dispersion 2 were coated onto said first inner coating layer forming a second coating layer with a grammage of 7 gsm. Sample 1 and 2 were further coated on the second side (print side) of the baseboard with Dispersion 2 forming a third coating layer of 5 gsm. Sample 3 were further coated on the second side with dispersion 1 forming a third coating layer with a grammage of 7 gsm whereupon dispersion 2 were coated onto said third coating layer forming a fourth coating layer with a grammage of 7 gsm.

The samples were thus prepared to show the following coating structures:
Sample 1 and 2 : Dispersion 2/Baseboard/Dispersion 1/Dispersion 2
Sample 3: Dispersion 2/Dispersion 1/Baseboard/Dispersion 1/Dispersion 2
Sample 4: Baseboard/Dispersion 1/Dispersion 2

**Table 1:**

| **Raw material** | **Dispersion 1 [wt%]** |
|---|---|
| Styrene acrylate latex | 40.6 |
| Clay pigment | 58.1 |
| Dispersion agent | 0.1 |
| NaOH | 0.1 |
| PVOH | 0.3 |
| Crosslinker | 0.3 |
| Defoamer | 0.4 |

As a reference, a first reference sample (Ref Board 1) was prepared by coating a paperboard baseboard (Tambrite 240 gsm) with Dispersion 1 to provide a coating layer of 7 gsm. A second reference sample (Ref Board 2) was prepared by providing a paperboard baseboard (Tambrite 240 gsm) with a first coating layer of Dispersion 1 (5 gsm) and a second dispersion coating layer (10 gsm) comprising 100 wt% styrene-acrylate latex onto said first coating layer.

The properties of the packaging materials of the invention and the reference board are summarized in table 2. The water absorption (COBB600) is measured on the first side/reverse side (RS) of the coated paperboard samples.

**Table 2**

| | Sample 1 | Sample 2 | Sample 3 | Sample 4 | Ref Board 1 | Ref Board 2 |
|---|---|---|---|---|---|---|
| Baseboard Grammage [g/m²] | 214 | 214 | 195 | 295 | 240 | 240 |
| Stretch at break CD [%] | 5.63 | 6.22 | 6.57 | 5.32 | 3,81 | 3,60 |
| Static coefficient of friction (mean) | 0.410 | 0.397 | 0.332 | 0.477 | 0,661 | 0,843 |
| Cobb600 RS [g/m2] | 3.5 | 1.5 | 2.0 | 2.3 | 84,0 | 6,1 |
| PTS reject level [%] | 11.2 | 11.1 | - | - | - | - |

As can be seen in table 2, the packaging materials made in accordance with the invention shows a low water absorption, a high stretch at break, a low static coefficient of friction and a low PTS reject level.

## Claims

1. A packaging comprising or being made from heat-sealable paperboard, the heat-sealable paperboard comprising:
- a paperboard substrate (1) comprising a first side and a second side,
- a first dispersion coating layer (2) on the first side of the paperboard substrate (1), wherein the first dispersion coating layer has a grammage in a range from ≥ 5 g/m² to ≤ 10 g/m²,
- a second dispersion coating layer (3) on the first dispersion coating layer (2), wherein the second dispersion coating layer has a grammage in a range from ≥ 5 g/m² to ≤ 10 g/m², and
- a third dispersion coating layer (4) on the second side of the paperboard substrate (1),
wherein the first dispersion coating layer (2) comprises a latex and pigment, the second dispersion coating layer (3) comprises a polyolefin in an amount in a range from ≥ 90 wt% to ≤ 100 wt%, based on the dry solid content of the layer, and the third dispersion coating layer (4) comprises polyolefin in an amount in a range from ≥ 90 wt% to ≤ 100 wt%, based on the dry solid content of the layer,
wherein the coated first side of the paperboard substrate forms an inside of the packaging and the coated second side of the paperboard substrate forms a print side of the packaging, and
wherein the reject level determined according to PTS test method RH021/97 received from the repulping of the paperboard is less than 12 wt%, based on a dry weight of the paperboard of 100 wt%.

2. The packaging according to claim 1, wherein the latex is selected from styrene-acrylate latex, styrene-butadiene latex, or a mixture thereof.

3. The packaging according to claim 1 or 2, wherein the first dispersion coating layer (2) comprises the latex in an amount in a range from ≥ 30 wt% to ≤ 70 wt%, based on the dry solid content of the layer.

4. The packaging according to any one of the preceding claims, wherein the first dispersion coating layer (2) comprises pigment in an amount in a range from ≥ 30 wt% to ≤ 70 wt%, preferably in an amount of 60 wt%, based on the dry solid content of the layer.

5. The packaging according to any one of the preceding claims, wherein the pigment is selected from clay and/or talc.

6. The packaging according to any one of the preceding claims, wherein the second dispersion coating layer (3) comprises a polyolefin selected from the group of polyethylene (PE), polypropylene (PP) and/or copolymers of polyethylene and polypropylene.

7. The packaging according to any one of the preceding claims, wherein the second dispersion coating layer (3) comprises the polyolefin in an amount in a range from ≥ 90 wt% to ≤ 98 wt%, based on the dry solid content of the layer.

8. The packaging according to any one of the preceding claims, wherein the second dispersion coating layer (3) comprises a co-binder in a range from ≥ 0 wt% to ≤ 5 wt%, preferably in a range from ≥ 1 wt% to ≤ 5 wt%, based on the dry solid content of the layer, wherein the co-binder preferably is a latex.

9. The packaging according to any one of the preceding claims, wherein the paperboard has
- a stretch at break (CD, determined by tensile strength according to ISO 1924-2) of ≥ 5 %, preferably ≥ 6 % or ≥ 7 %, and/or
- a water absorption rate (COBB 600, determined according to SCAN-test P 12:64) of ≤ 10 g/m², preferably ≤ 5 g/m².

10. A method of manufacturing a packaging, the method comprising the steps of:
- providing a paperboard substrate (1) comprising a first side and a second side,
- applying a first dispersion coating layer (2) on the first side of the paperboard substrate (1), wherein the first dispersion coating layer has a grammage in a range from ≥ 5 g/m² to ≤ 10 g/m²,
- applying a second dispersion coating layer (3) on the first dispersion coating layer (2), wherein the second dispersion coating layer has a grammage in a range from ≥ 5 g/m² to ≤ 10 g/m², and
- applying a third dispersion coating layer (4) on the second side of the paperboard substrate (1),
to obtain a heat-sealable paperboard,
wherein the first dispersion coating layer (2) comprises a latex and pigment, the second dispersion coating layer (3) comprises a polyolefin in an amount in a range from ≥ 90 wt% to ≤ 100 wt%, based on the dry solid content of the layer, and the third dispersion coating layer (4) comprises polyolefin in an amount in a range from ≥ 90 wt% to ≤ 100 wt%, based on the dry solid content of the layer, and
- converting the heat-sealable paperboard to a packaging, wherein the coated first side of the paperboard substrate forms an inside of the packaging and the coated second side of the paperboard substrate forms a print side of the packaging, and
wherein the reject level determined according to PTS test method RH021/97 received from the repulping of the paperboard is less than 12 wt%, based on a dry weight of the paperboard of 100 wt%.

## Patentansprüche

1. Verpackung, umfassend oder hergestellt aus heißsiegelfähigem Karton, der heißsiegelfähige Karton umfassend:
- ein Kartonsubstrat (1), umfassend eine erste Seite und eine zweite Seite,
- eine erste Dispersionsbeschichtungsschicht (2) auf der ersten Seite des Kartonsubstrats (1), wobei die erste Dispersionsbeschichtungsschicht ein Flächengewicht in einem Bereich von ≥ 5 g/m² bis ≤ 10 g/m² aufweist,
- eine zweite Dispersionsbeschichtungsschicht (3) auf der ersten Dispersionsbeschichtungsschicht (2), wobei die zweite Dispersionsbeschichtungsschicht ein Flächengewicht in einem Bereich von ≥ 5 g/m² bis ≤ 10 g/m² aufweist, und
- eine dritte Dispersionsbeschichtungsschicht (4) auf der zweiten Seite des Kartonsubstrats (1),
wobei die erste Dispersionsbeschichtungsschicht (2) einen Latex und Pigment umfasst, die zweite Dispersionsbeschichtungsschicht (3) ein Polyolefin in einer Menge in einem Bereich von ≥ 90 Gew.-% bis ≤ 100 Gew.-%, bezogen auf den Trockenfeststoffgehalt der Schicht, umfasst und die dritte Dispersionsbeschichtungsschicht (4) Polyolefin in einer Menge in einem Bereich von ≥ 90 Gew.-% bis ≤ 100 Gew.-%, bezogen auf den Trockenfeststoffgehalt der Schicht, umfasst,
wobei die beschichtete erste Seite des Kartonsubstrats eine Innenseite der Verpackung bildet und die beschichtete zweite Seite des Kartonsubstrats eine Druckseite der Verpackung bildet, und
wobei die nach dem PTS-Prüfverfahren RH021/97 ermittelte Ausschussmenge aus dem Repulpieren des Kartons weniger als 12 Gew.-% beträgt, bezogen auf ein Trockengewicht des Kartons von 100 Gew.-%.

2. Verpackung nach Anspruch 1, wobei der Latex ausgewählt ist aus Styrol-Acrylat-Latex, Styrol-Butadien-Latex oder einem Gemisch davon.

3. Verpackung nach Anspruch 1 oder 2, wobei die erste Dispersionsbeschichtungsschicht (2) den Latex in einer Menge in einem Bereich von ≥ 30 Gew.-% bis ≤ 70 Gew.-%, bezogen auf den Trockenfeststoffgehalt der Schicht, umfasst.

4. Verpackung nach einem der vorhergehenden Ansprüche, wobei die erste Dispersionsbeschichtungsschicht (2) Pigment in einer Menge in einem Bereich von ≥ 30 Gew.-% bis ≤ 70 Gew.-%, bevorzugt in einer Menge von 60 Gew.-%, bezogen auf den Trockenfeststoffgehalt der Schicht, umfasst.

5. Verpackung nach einem der vorhergehenden Ansprüche, wobei das Pigment aus Ton und/oder Talk ausgewählt ist.

6. Verpackung nach einem der vorhergehenden Ansprüche, wobei die zweite Dispersionsbeschichtungsschicht (3) ein Polyolefin umfasst, ausgewählt aus der Gruppe von Polyethylen (PE), Polypropylen (PP) und/oder Copolymeren aus Polyethylen und Polypropylen.

7. Verpackung nach einem der vorhergehenden Ansprüche, wobei die zweite Dispersionsbeschichtungsschicht (3) das Polyolefin in einer Menge in einem Bereich von ≥ 90 Gew.-% bis ≤ 98 Gew.-%, bezogen auf den Trockenfeststoffgehalt der Schicht, umfasst.

8. Verpackung nach einem der vorhergehenden Ansprüche, wobei die zweite Dispersionsbeschichtungsschicht (3) ein Co-Bindemittel in einem Bereich von ≥ 0 Gew.-% bis ≤ 5 Gew.-%, bevorzugt in einem Bereich von ≥ 1 Gew.-% bis ≤ 5 Gew.-%, bezogen auf den Trockenfeststoffgehalt der Schicht, umfasst, wobei das Co-Bindemittel bevorzugt ein Latex ist.

9. Verpackung nach einem der vorhergehenden Ansprüche, wobei der Karton aufweist
- eine Bruchdehnung (CD, bestimmt durch Zugfestigkeit nach ISO 1924-2) von ≥ 5 %, bevorzugt ≥ 6 % oder ≥ 7 %, und/oder
- eine Wasserabsorptionsrate (COBB 600, bestimmt nach SCAN-Test P 12:64) von ≤ 10 g/m², bevorzugt ≤ 5 g/m².

10. Verfahren für eine Herstellung einer Verpackung, das Verfahren die folgenden Schritte umfassend:
- Vorsehen eines Kartonsubstrats (1), umfassend eine erste Seite und eine zweite Seite,
- Aufbringen einer ersten Dispersionsbeschichtungsschicht (2) auf die erste Seite des Kartonsubstrats (1), wobei die erste Dispersionsbeschichtungsschicht ein Flächengewicht in einem Bereich von ≥ 5 g/m² bis ≤ 10 g/m² aufweist,
- Aufbringen einer zweiten Dispersionsbeschichtungsschicht (3) auf die erste Dispersionsbeschichtungsschicht (2), wobei die zweite Dispersionsbeschichtungsschicht ein Flächengewicht in einem Bereich von ≥ 5 g/m² bis ≤ 10 g/m² aufweist, und
- Aufbringen einer dritten Dispersionsbeschichtungsschicht (4) auf die zweite Seite des Kartonsubstrats (1),
um einen heißsiegelfähigen Karton zu erhalten,
wobei die erste Dispersionsbeschichtungsschicht (2) einen Latex und Pigment umfasst, die zweite Dispersionsbeschichtungsschicht (3) ein Polyolefin in einer Menge in einem Bereich von ≥ 90 Gew.-% bis ≤ 100 Gew.-%, bezogen auf den Trockenfeststoffgehalt der Schicht, umfasst und die dritte Dispersionsbeschichtungsschicht (4) Polyolefin in einer Menge in einem Bereich von ≥ 90 Gew.-% bis ≤ 100 Gew.-%, bezogen auf den Trockenfeststoffgehalt der Schicht, umfasst, und
- Verarbeiten des heißsiegelfähigen Kartons zu einer Verpackung, wobei die beschichtete erste Seite des Kartonsubstrats eine Innenseite der Verpackung bildet und die beschichtete zweite Seite des Kartonsubstrats eine Druckseite der Verpackung bildet, und
wobei die nach dem PTS-Prüfverfahren RH021/97 ermittelte Ausschussmenge aus dem Repulpieren des Kartons weniger als 12 Gew.-% beträgt, bezogen auf ein Trockengewicht des Kartons von 100 Gew.-%.

## Revendications

1. Emballage comprenant ou étant composé de carton thermoscellable, le carton thermoscellable comprenant :
- un substrat en carton (1) comprenant un premier côté et un deuxième côté,
- une première couche d'enduit en dispersion (2) sur le premier côté du substrat en carton (1), dans lequel la première couche d'enduit en dispersion a un grammage dans une plage de ≥ 5 g/m² à ≤ 10 g/m²,
- une deuxième couche d'enduit en dispersion (3) sur la première couche d'enduit en dispersion (2), dans lequel la deuxième couche d'enduit en dispersion a un grammage dans une plage de ≥ 5 g/m² à ≤ 10 g/m², et
- une troisième couche d'enduit en dispersion (4) sur le deuxième côté du substrat en carton (1),
dans lequel la première couche d'enduit en dispersion (2) comprend un latex et un pigment, la deuxième couche d'enduit en dispersion (3) comprend une polyoléfine en une quantité dans une plage de ≥ 90 % en poids à ≤ 100 % en poids, sur la base de la teneur en matières sèches solides de la couche, et la troisième couche d'enduit en dispersion (4) comprend une polyoléfine en une quantité dans une plage de ≥ 90 % en poids à ≤ 100 % en poids, sur la base de la teneur en matières sèches solides de la couche,
dans lequel le premier côté enduit du substrat en carton forme un intérieur de l'emballage et le deuxième côté enduit du substrat en carton forme un côté d'impression de l'emballage, et
dans lequel le niveau de rejet déterminé selon le procédé d'essai PTS RH021/97 reçu en provenance de la désintégration du carton est inférieur à 12 % en poids, sur la base d'un poids à sec du carton de 100 % en poids.

2. Emballage selon la revendication 1, dans lequel le latex est choisi parmi un latex de styrène-acrylate, un latex de styrène-butadiène ou un mélange de ceux-ci.

3. Emballage selon la revendication 1 ou 2, dans lequel la première couche d'enduit en dispersion (2) comprend du latex en une quantité dans une plage de ≥ 30 % en poids à ≤ 70 % en poids, sur la base de la teneur en matières sèches solides de la couche.

4. Emballage selon l'une quelconque des revendications précédentes, dans lequel la première couche d'enduit en dispersion (2) comprend un pigment en une quantité dans une plage de ≥ 30 % en poids à ≤ 70 % en poids, de préférence en une quantité dans une plage de 60 % en poids, sur la base de la teneur en matières sèches solides de la couche.

5. Emballage selon l'une quelconque des revendications précédentes, dans lequel le pigment est choisi parmi argile et/ou talc.

6. Emballage selon l'une quelconque des revendications précédentes, dans lequel la deuxième couche d'enduit en dispersion (3) comprend une polyoléfine choisie dans le groupe comprenant polyéthylène (PE), polypropylène (PP) et/ou des copolymères de polyéthylène et de polypropylène.

7. Emballage selon l'une quelconque des revendications précédentes, dans lequel la deuxième couche d'enduit en dispersion (3) comprend la polyoléfine en une quantité dans une plage de ≥ 90 % en poids à ≤ 98 % en poids, sur la base de la teneur en matières sèches solides de la couche.

8. Emballage selon l'une quelconque des revendications précédentes, dans lequel la deuxième couche d'enduit en dispersion (3) comprend un co-liant dans une plage de ≥ 0 % en poids à ≤ 5 % en poids, de préférence dans une plage de ≥ 1 % en poids à ≤ 5 % en poids, sur la base de la teneur en matières sèches solides de la couche, dans lequel le co-liant est de préférence un latex.

9. Emballage selon l'une quelconque des revendications précédentes, dans lequel le carton a
- un allongement à la rupture par traction (CD, déterminé par la résistance à la traction selon ISO 1924-2) ≥ 5 %, de préférence ≥ 6 % ou ≥ 7 %, et/ou
- un taux d'absorption d'eau (COBB 600, déterminé selon l'essai SCAN-P 12:64) ≤ 10 g/m², de préférence ≤ 5 g/m².

10. Procédé de fabrication d'un emballage, le procédé comprenant les étapes :
- de fourniture d'un substrat en carton (1) comprenant un premier côté et un deuxième côté,
- d'application d'une première couche d'enduit en dispersion (2) sur le premier côté du substrat en carton (1), dans lequel la première couche d'enduit en dispersion a un grammage dans une plage de ≥ 5 g/m² à ≤ 10 g/m²,
- d'application d'une deuxième couche d'enduit en dispersion (3) sur la première couche d'enduit en dispersion (2), dans lequel la deuxième couche d'enduit en dispersion a un grammage dans une plage de ≥ 5 g/m² à ≤ 10 g/m², et
- d'application d'une troisième couche d'enduit en dispersion (4) sur le deuxième côté du substrat en carton (1),
pour obtenir un carton thermoscellable,
dans lequel la première couche d'enduit en dispersion (2) comprend un latex et un pigment, la deuxième couche d'enduit en dispersion (3) comprend une polyoléfine en une quantité dans une plage de ≥ 90 % en poids à ≤ 100 % en poids, sur la base de la teneur en matières sèches solides de la couche, et la troisième couche d'enduit en dispersion (4) comprend une polyoléfine en une quantité dans une plage de ≥ 90 % en poids à ≤ 100 % en poids, sur la base de la teneur en matières sèches solides de la couche, et
- de conversion du carton thermoscellable en un emballage, dans lequel le premier côté enduit du substrat en carton forme un intérieur de l'emballage et le deuxième côté enduit du substrat en carton forme un côté d'impression de l'emballage, et
dans lequel le niveau de rejet déterminé selon le procédé d'essai PTS RH021/97 reçu en provenance de la désintégration du carton est inférieur à 12 % en poids, sur la base d'un poids à sec du carton de 100 % en poids.
